(19) Europäisches Patentamt / European Patent Office / Office européen des brevets

(11) **EP 4 621 991 A1**

(12) **EUROPEAN PATENT APPLICATION**
published in accordance with Art. 153(4) EPC

(43) Date of publication:
**24.09.2025 Bulletin 2025/39**

(21) Application number: **23902590.1**

(22) Date of filing: **08.12.2023**

(51) International Patent Classification (IPC):
*H01Q 1/24* (2006.01)   *H04M 1/02* (2006.01)

(52) Cooperative Patent Classification (CPC):
**H01Q 1/24; H01Q 1/36; H04M 1/02**

(86) International application number:
**PCT/CN2023/137322**

(87) International publication number:
**WO 2024/125394 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.12.2022   CN 202211596890
31.03.2023   CN 202310386790**

(71) Applicant: **Huawei Technologies Co., Ltd.
Shenzhen, Guangdong 518129 (CN)**

(72) Inventors:
• **ZHANG, Yanan**
  **Shenzhen, Guangdong 518129 (CN)**
• **ZHOU, Yipan**
  **Shenzhen, Guangdong 518129 (CN)**

(74) Representative: **Thun, Clemens
  Mitscherlich PartmbB
  Patent- und Rechtsanwälte
  Karlstraße 7
  80333 München (DE)**

(54) **ELECTRONIC DEVICE**

(57) An embodiment of this application provides an electronic device, including a radiator, a metal piece, and a first sensor. The radiator includes a first end and a second end that are both open ends, the metal piece and the radiator are spaced apart in a first direction, and the first sensor is electrically connected to the radiator. The first sensor senses a first related parameter of the electronic device by using the radiator and the metal piece.

FIG. 3

## Description

This application claims priorities to Chinese Patent Application No. 202211596890.8, filed with the China National Intellectual Property Administration on December 12, 2022 and entitled "ANTENNA, SENSOR, AND SENSING METHOD", and to Chinese Patent Application No. 202310386790.0, filed with the China National Intellectual Property Administration on March 31, 2023 and entitled "ELECTRONIC DEVICE", both of which are incorporated herein by reference in their entireties.

## TECHNICAL FIELD

This application relates to the field of wireless communication, and in particular, to an electronic device.

## BACKGROUND

With development of the information era, an increasing rate is needed, and a requirement for a high rate also leads to an increasing requirement for over-the-air (over-the-air, OTA) tests of antennas. However, the regulations increasingly focus on impact of products such as mobile phones on people. Such an intensified contradiction between a requirement for high-performance OTA and a requirement for low radiation limits designs of the antennas.

How to meet legal and regulatory requirements for a specific absorption rate (specific absorption rate, SAR) of an electromagnetic wave while maintaining OTA performance of the antennas leads to a large quantity of solutions, including an intelligent user scenario differentiation function, compliance with the regulations at the sacrifice of antenna performance, multi-antenna assistance, and the like.

## SUMMARY

An embodiment of this application provides an electronic device, including a radiator, a metal piece, and a first sensor. The first sensor is electrically connected to the radiator, and the metal piece is disposed near the radiator to increase a sensing distance of the first sensor, so that the electronic device obtains better communication performance.

According to a first aspect, an electronic device is provided, including: a radiator, including a first end and a second end, where the first end and the second end are open ends; a metal piece, where the metal piece and the radiator are spaced apart in a first direction, and do not completely overlap in the first direction; and a first specific absorption rate sensor, where the first sensor is electrically connected to the radiator, and a spacing between the radiator and the metal piece in the first direction is greater than or equal to 0.1 mm and less than or equal to 5 mm.

According to the technical solution in this embodiment of this application, the first sensor senses a first related parameter of the electronic device by using the radiator and the metal piece. In an embodiment, the metal piece is spaced from and does not completely overlap with the radiator in the first direction, to increase an area of a sensing body of the first sensor, and enhance sensing effect. In an embodiment, an equivalent capacitance value between a human body and the sensing body may be increased (when the human body is at a same distance from the radiator). After the equivalent capacitance value is increased, during approaching of the human body, a variation of the capacitance value increases, and a sensing distance of the first sensor increases. After the sensing distance of the first sensor increases, when the human body is far away from the electronic device, approaching of the human body may be sensed. When a distance between the human body and the sensing body is a first distance, a transmit power of an antenna formed by the radiator is reduced, to prevent the transmit power of the antenna from being forcibly reduced, so that a radiation feature of the antenna is improved. In this way, the electronic device can obtain better communication performance.

With reference to the first aspect, in some implementations of the first aspect, a ratio of a projected area S1 of the radiator in the first direction to a projected area S2 of the metal piece in the first direction is greater than or equal to one-fifth and less than or equal to 2.

According to the technical solution in this embodiment of this application, when the ratio of the projected area S1 of the radiator in the first direction to the projected area S2 of the metal piece in the first direction is greater than or equal to one-fifth and less than or equal to 2, the first sensor has a good sensing distance. This can also facilitate a layout of the metal piece and the radiator.

With reference to the first aspect, in some implementations of the first aspect, a ratio of an area S3 of an overlapping portion between the radiator and the metal piece in the first direction to the projected area S1 of the radiator in the first direction is greater than or equal to 0.1 and less than or equal to 0.9.

With reference to the first aspect, in some implementations of the first aspect, the ratio of the overlapping area S3 between the radiator and the metal piece in the first direction to the projected area S1 of the radiator in the first direction is greater than 0.1 and less than or equal to 0.5.

According to the technical solution in this embodiment of this application, in a process in which a coverage rate x (the overlap rate x may be understood as the ratio of the overlapping area S3 between the radiator and the metal piece in the first direction to the projected area S1 of the radiator in the first direction) increases from 0.1 to 1, the sensing distance of the first sensor first increases and then decreases. When the overlap rate x is within the foregoing range, the first sensor can have a good sensing distance. This can also facilitate a layout of the metal piece and the radiator.

With reference to the first aspect, in some implementations of the first aspect, a ratio of the overlapping area S3 between the radiator and the metal piece in the first direction to the projected area S2 of the metal piece in the first direction is greater than or equal to 0.02 and less than or equal to 1.

According to the technical solution in this embodiment of this application, when the ratio of the overlapping area S3 between the radiator and the metal piece in the first direction to the projected area S2 of the metal piece in the first direction is within the foregoing range, the first sensor can have a good sensing distance. This can also facilitate a layout of the metal piece and the radiator.

With reference to the first aspect, in some implementations of the first aspect, the electronic device further includes a printed circuit board PCB, and the radiator and the metal piece are disposed on a same side of the PCB.

According to the technical solution in this embodiment of this application, the metal piece may be located between the radiator and the human body, and this may be understood that a distance between the radiator and the PCB is less than a distance between the metal piece and the PCB. Alternatively, the radiator may be located between the metal piece and the human body, and this may be understood that a distance between the radiator and the PCB is greater than a distance between the metal piece and the PCB.

With reference to the first aspect, in some implementations of the first aspect, the electronic device further includes a bracket. The radiator is located on a first surface of the bracket, and the metal piece is located on a second surface of the bracket.

With reference to the first aspect, in some implementations of the first aspect, the electronic device further includes a bracket and a rear cover. The radiator is located on a surface of the rear cover, and the metal piece is located on a surface of the bracket.

With reference to the first aspect, in some implementations of the first aspect, the electronic device further includes a conductive side frame and the PCB. The radiator includes at least a part of the conductive side frame. The metal piece is located on a surface that is of the PCB and that is opposite to the radiator, or is located between the PCB and the radiator.

According to the technical solution in this embodiment of this application, the radiator and the metal piece may be arranged based on actual space in the electronic device.

With reference to the first aspect, in some implementations of the first aspect, the radiator further includes a second connection point, and the electronic device further includes a capacitor, where the capacitor is electrically connected between the second connection point and a ground plane.

According to a second aspect, an electronic device is provided, including: a radiator, where a first end and a second end of the radiator are open ends; a metal piece, where at least a part of the metal piece is disposed parallel to or coplanar with at least a part of the radiator; and a first specific absorption rate sensor, where the first sensor is electrically connected to the radiator. The first sensor is further electrically connected to the metal piece, or the metal piece is electrically connected to the radiator.

With reference to the second aspect, in some implementations of the second aspect, the metal piece is electrically connected to the radiator. The electronic device further includes an electronic element, and the electronic element is coupled between the metal piece and the radiator.

With reference to the second aspect, in some implementations of the second aspect, an equivalent inductance value of the electronic element is greater than or equal to 22 nH.

With reference to the second aspect, in some implementations of the second aspect, a distance between the metal piece and the radiator is less than or equal to 100 mm.

With reference to the second aspect, in some implementations of the second aspect, a ratio of an area S1 of the radiator to an area S2 of the metal piece is greater than or equal to one-fifth and less than or equal to 2.

With reference to the second aspect, in some implementations of the second aspect, the electronic device further includes a bracket, and the radiator and the metal piece are located on a surface of the bracket.

With reference to the second aspect, in some implementations of the second aspect, the electronic device further includes a rear cover, and the radiator and the metal piece are located on a surface of the rear cover.

With reference to the second aspect, in some implementations of the second aspect, the electronic device further includes a capacitor, and the capacitor is electrically connected between the radiator and a ground plane.

According to a third aspect, a transmit power control method is provided. The method is applied to any electronic device according to the first aspect or the second aspect. The electronic device further includes a radio frequency chip, and the radio frequency chip is electrically connected to the first sensor. The first sensor determines a first parameter variation value. When the first parameter variation value is greater than or equal to a first threshold, the first sensor sends a first signal to the radio frequency chip. The radio frequency chip changes, based on the first signal, a power of an electrical signal transmitted to the radiator from a first value to a second value, where the second value is less than the first value. In an embodiment, a first parameter is a capacitance value or a capacitance-related parameter.

With reference to the third aspect, in some implementations of the third aspect, the method further includes: When the first parameter variation value is less than the first threshold, the first sensor sends a second signal to the radio frequency chip. The radio frequency chip changes, based on the second signal, the power of the electrical signal transmitted to the radiator from the second value to the first value.

## BRIEF DESCRIPTION OF DRAWINGS

FIG. 1 is a diagram of an electronic device according to an embodiment of this application;
FIG. 2 is a diagram of an application scenario of a first sensor according to an embodiment of this application;
FIG. 3 is a diagram of a layout of a first sensor according to an embodiment of this application;
FIG. 4 is a schematic of an equivalent circuit of the layout shown in FIG. 3;
FIG. 5 is a diagram of another layout of a first sensor according to an embodiment of this application;
FIG. 6 is a diagram of a structure of an electronic device 10 according to an embodiment of this application;
FIG. 7 is a diagram of a structure of an electronic device 10 according to an embodiment of this application;
FIG. 8 is a diagram of a structure of an electronic device 10 according to an embodiment of this application;
FIG. 9 is a diagram of another layout of a first sensor according to an embodiment of this application;
FIG. 10 is a diagram of a structure of an electronic device 10 according to an embodiment of this application;
FIG. 11 is a diagram of a structure of an electronic device 10 according to an embodiment of this application;
FIG. 12 is a diagram of another layout of a first sensor according to an embodiment of this application;
FIG. 13 is a diagram of a structure of an electronic device 10 according to an embodiment of this application;
FIG. 14 is a diagram of a structure of an electronic device 10 according to an embodiment of this application; and
FIG. 15 is a flowchart of a power control method according to an embodiment of this application.

## DESCRIPTION OF EMBODIMENTS

The following explains terms that may appear in embodiments of this application.

Coupling: The coupling may be understood as direct coupling and/or indirect coupling, and a "coupling connection" may be understood as a direct coupling connection and/or an indirect coupling connection. The direct coupling may also be referred to as an "electrical connection", which may be understood as physical contact and electrical conduction of components, or may be understood as a form of connection between different components in a line structure through a physical line that can transmit an electrical signal, like a printed circuit board (printed circuit board, PCB) copper foil or a conducting wire. The "indirect coupling" may be understood as electrical conduction of two conductors in a spaced/non-contact manner. In an embodiment, the indirect coupling may also be referred to as capacitive coupling. For example, signal transmission is implemented by forming an equivalent capacitor through coupling in a slot between two spaced conductive members.

Connection/being connected to: The connection/being connected to may mean a mechanical connection relationship or a physical connection relationship, for example, a connection between A and B or that A is connected to B may mean that there is a fastening component (like a screw, a bolt, or a rivet) between A and B, or A and B are in contact with each other and A and B are difficult to be separated.

Connection: That two or more components are conducted or connected in the "electrical connection" or "indirect coupling" manner to perform signal/energy transmission may be referred to as connection.

Opposite/disposed opposite to each other: That A is disposed opposite to B may mean that A and B are disposed opposite to each other or face to face (opposite to, or face to face).

The limitations such as "parallel", "coplanar", and "same" (for example, a same length and a same width) mentioned in embodiments of this application are all for a current process level, but are not absolutely -strict definitions in a mathematical sense. For example, a deviation of a predetermined angle (for example, $\pm 5°$, $\pm 10°$) may exist between two radiators that are parallel to each other.

Lumped element/component: The lumped element/component is a general name of all elements whose sizes are far less than a wavelength corresponding to an operating frequency of a circuit. For a signal, a characteristic of the element is constantly fixed at any time, regardless of a frequency.

Distributed element/component: Different from the lumped element, if a size of an element is close to or greater than a wavelength corresponding to an operating frequency of a circuit, when a signal passes through the element, a characteristic of each point of the element varies with the signal. In this case, the element cannot be considered as a single entity with a fixed characteristic, but should be referred to as a distributed element.

Capacitor: The capacitor may be understood as a lumped capacitor and/or a distributed capacitor. The lumped capacitor is a capacitive component, for example, a capacitive element. The distributed capacitor (or a distribution capacitor) is an equivalent capacitor formed by two conductive members that are spaced by a specific slot.

Inductor: The inductor may be understood as a lumped inductor and/or a distributed inductor. The lumped inductor is an inductive component, for example, an inductive element, and the distributed inductor (or a distribution inductor) is an equivalent inductor formed by using a conductive member with a specific length.

Radiator: The radiator is an apparatus configured to receive/send electromagnetic wave radiation in an antenna. In some cases, an "antenna" is a radiator in a narrow sense. The radiator converts guided wave energy from a transmitter into a radio wave, or converts a radio wave into guided wave energy to radiate and receive a radio wave. Modulated high-frequency current energy (or guided wave energy) generated by the transmitter is transmitted to a transmit radiator through a feed line. The radiator converts the energy into specific polarized electromagnetic wave energy and transmits the energy in a required direction. A receive radiator converts specific polarized electromagnetic wave energy from a specific direction of space into modulated high-frequency current energy, and transmits the modulated high-frequency current energy to an input end of a receiver through a feed line.

The radiator may include a conductor having a specific shape and size, for example, a linear radiator or a sheet-like radiator. A specific shape is not limited in this application. In an embodiment, the linear radiator may be referred to as a wire antenna for short. In an embodiment, the linear radiator may be implemented by a conductive side frame, and may also be referred to as a side frame antenna. In an embodiment, the linear radiator may be implemented by a support conductor, and may also be referred to as a support antenna. In an embodiment, a wire diameter (for example, including a thickness and a width) of the linear radiator or a radiator of the wire antenna is much less than a wavelength (for example, a dielectric wavelength) (for example, is less than 1/16 of the wavelength), and a length may be compared to the wavelength (for example, the dielectric wavelength) (for example, the length is near 1/8 of the wavelength, or 1/8 to 1/4 of the wavelength, or 1/4 to 1/2 of the wavelength, or greater). Main forms of the wire antenna include the following: a dipole antenna, a half-wave dipole antenna, a monopole antenna, a loop antenna, an inverted-F antenna (inverted-F Antenna, IFA), and a planar inverted-F antenna (Planar Inverted-F Antenna, PIFA). For example, for the dipole antenna, each dipole antenna usually includes two radiation stubs, and each stub is fed by a feed part from a feed end of the radiation stub. For example, the inverted-F antenna (Inverted-F Antenna, IFA) may be considered as being obtained by adding a ground path to a monopole antenna. The IFA antenna has a feed point and a ground point. A side view of the IFA antenna is inverted-F-shaped, and therefore, the IFA antenna is referred to as an inverted-F antenna. In an embodiment, the sheet-like radiator may include a microstrip antenna or a patch (patch) antenna. In an embodiment, the sheet-like radiator may be implemented by a planar conductor (for example, a conductive sheet or a conductive coating). In an embodiment, the sheet-like radiator may include a conductive sheet, for example, a copper sheet. In an embodiment, the sheet-like radiator may include a conductive coating, for example, silver paste. A shape of the sheet-like radiator includes a circular shape, a rectangular shape, a ring shape, and the like. A specific shape is not limited in this application. A structure of the microstrip antenna generally includes a dielectric substrate, a radiator, and a ground plane, where the dielectric substrate is disposed between the radiator and the ground plane.

The radiator may also include a slot or a slit formed on a conductor, for example, a closed or semi-closed slot or slit formed on a grounded conductor surface. In an embodiment, a radiator with a slot or a slit may be referred to as a slot antenna or a slotted antenna for short. In an embodiment, a radiator with a closed slot or slit may be referred to as a closed slot antenna for short. In an embodiment, a radiator with a semi-closed slot or slit (for example, an opening is additionally provided on the closed slot or slit) may be referred to as an open slot antenna for short. In some embodiments, the slot is long strip-shaped. In some embodiments, a length of the slot is approximately half the wavelength (for example, the dielectric wavelength). In some embodiments, a length of the slot is approximately an integer multiple of the wavelength (for example, a one-time dielectric wavelength). In some embodiments, the slot may be used for feeding by using a transmission line bridged on one side or two sides of the slot. In this way, a radio frequency electromagnetic field is excited on the slot, and an electromagnetic wave is radiated to space. In an embodiment, a radiator of the slot antenna or the slotted antenna may be implemented by a conductive side frame that is grounded at two ends, and may also be referred to as a side frame antenna. In this embodiment, it may be considered that the slot antenna or the slotted antenna includes a linear radiator, and the linear radiator is spaced apart from the ground plane and is grounded at two ends of the radiator, to form a closed or semi-closed slot or slit. In an embodiment, the radiator of the slot antenna or the slotted antenna may be implemented by a support conductor that is grounded at both ends, and may also be referred to as a support antenna.

End/point: An "end/point" in a first end/second end/feed end/ground end/feed point/ground point/connection point of an antenna radiator cannot be understood in a narrow sense as an end point or an end part that is physically disconnected from another radiator, but may be considered as a point or a segment on a continuous radiator. In an embodiment, the "end/point" may include a connection/coupling area that is on the antenna radiator and that is coupled to another conductive structure. For example, the feed end/feed point may be a coupling area (for example, an area opposite to a part of the feed circuit) that is on the antenna radiator and that is coupled to the feed structure or the feed circuit. For another example, the ground end/ground point may be a connection/coupling area that is on the antenna radiator and that is coupled to a ground structure or a ground circuit.

Open end/closed end: In some embodiments, the open end/closed end is, for example, relative to another conductor. The closed end is electrically connected to the another conductor, and the open end is not electrically connected to the another conductor. In an embodiment, the open end may also be referred to as a free end, an opening end, or an open-circuit end. It should be understood that, in some embodiments, another conductor may be coupled through the open end, to transfer coupling energy (which may be understood as transferring a current).

Resonance/resonance frequency: The resonance frequency is also referred to as a resonant frequency. The resonance frequency may be a frequency at which an imaginary part of an input impedance of an antenna is zero. The resonance frequency may have a frequency range, namely, a frequency range in which resonance occurs. A frequency corresponding to a strongest resonance point is a center frequency. A return loss of the center frequency may be less than -20 dB.

Resonance frequency band: A range of a resonance frequency is the resonance frequency band, and a return loss of any frequency on the resonance frequency band may be less than -6 dB or -5 dB.

Communication frequency band/operating frequency band: Regardless of a type of antenna, the antenna constantly operates in a specific frequency range (a frequency band width). For example, an operating frequency band of an antenna supporting a B40 frequency band includes a frequency in a range of 2300 MHz to 2400 MHz. In other words, the operating frequency band of the antenna includes a B40 frequency band. A frequency range that meets a requirement of an indicator may be considered as an operating frequency band of the antenna.

The resonance frequency band and the operating frequency band may be the same or different, or frequency ranges thereof may partially overlap. In an embodiment, the resonance frequency band of the antenna may cover a plurality of operating frequency bands of the antenna.

Electrical length: The electrical length may be a ratio of a physical length (namely, a mechanical length or a geometric length) to a wavelength of a transmitted electromagnetic wave, and the electrical length may meet the following formula:

$$\overline{L} = \frac{L}{\lambda}$$

L indicates a physical length, and $\lambda$ indicates a wavelength of an electromagnetic wave.

Wavelength: The wavelength or an operating wavelength may be a wavelength corresponding to a center frequency of a resonance frequency or a center frequency of an operating frequency band supported by an antenna. For example, it is assumed that a center frequency of a B1 uplink frequency band (with a resonance frequency ranging from 1920 MHz to 1980 MHz) is 1955 MHz, the operating wavelength may be a wavelength calculated by using the frequency of 1955 MHz. The "operating wavelength" is not limited to the center frequency, and may alternatively be a wavelength corresponding to a non-center frequency of the resonance frequency or the operating frequency band.

It should be understood that a wavelength of a radiation signal in the air may be calculated as follows: (air wavelength or vacuum wavelength)=speed of light/frequency, where the frequency is a frequency (MHz) of the radiation signal, and the speed of light may be $3\times108$ m/s. The wavelength of the radiation signal in the medium may be calculated as follows: dielectric wavelength=(speed of light/ $\sqrt{\varepsilon}$ )/frequency, where $\varepsilon$ is a relative dielectric constant of the medium. The wavelength in embodiments of this application is usually a dielectric wavelength, and may be a dielectric wavelength corresponding to the center frequency of the resonance frequency, or a dielectric wavelength corresponding to the center frequency of the operating frequency band supported by the antenna. For example, it is assumed that a center frequency of a B1 uplink frequency band (with a resonance frequency ranging from 1920 MHz to 1980 MHz) is 1955 MHz, the wavelength may be a dielectric wavelength calculated by using the frequency of 1955 MHz. The "dielectric wavelength" is not limited to the center frequency, and may alternatively be a dielectric wavelength corresponding to the non-center frequency of the resonance frequency or the operating frequency band. For ease of understanding, the dielectric wavelength mentioned in embodiments of this application may be simply calculated by using a relative dielectric constant of the medium filled on one or more sides of the radiator.

Specific absorption rate (specific absorption rate, SAR): The specific absorption rate of an electromagnetic wave is an expression unit that measures how much radio frequency radiation energy is actually absorbed by a body, is referred to as a specific absorption ratio, and is expressed in watt per kilogram (W/kg) or milliwatt per gram (mW/g). The SAR is accurately defined as a derivative, relative to time, of unit energy (dw) absorbed by unit mass (dm) in a unit volume (dv) of a given mass density (ρ-density of human tissues).

Currently, there are two international standards: the European standard of 2 w/kg and the American standard of 1.6 w/kg. A specific meaning of the European standard means that electromagnetic radiation energy absorbed by each kilogram of human tissues cannot not exceed 2 watts in 6 minutes.

Limitations related to a position and a distance, such as being in the middle or at a middle position, mentioned in embodiments of this application are all described in terms of a current process level, and are not absolutely-strict definitions in mathematics. For example, the middle (position) of a conductor may be a conductor part including a midpoint on the conductor, or may be a conductor part that includes the midpoint on the conductor and whose length is one-eighth of a wavelength, where the wavelength may be a wavelength corresponding to an operating frequency band of the antenna, may be a wavelength corresponding to a center frequency of the operating frequency band, or a wavelength corresponding to a resonance point. For another example, the middle (position) of the conductor may be a conductor part that is on the conductor and whose distance from the midpoint is less than a predetermined threshold (for example, 1 mm, 2 mm, or 2.5 mm).

The limitations such as "symmetric" (for example, axisymmetric or centrosymmetric) and "same" (for example, a same length and a same width) mentioned in embodiments of this application are all for a current process level, and are not absolutely-strict definitions in mathematics. A deviation of a predetermined threshold or predetermined angle may exist between two. In an embodiment, the predetermined threshold may be less than or equal to a threshold of 1 mm. For example, the predetermined threshold may be 0.5 mm, or may be 0.1 mm. In an embodiment, the predetermined angle may be an angle within a range of $\pm 10°$, for example, a deviation of the predetermined angle is $\pm 5°$.

Ground or ground plane: The ground or ground plane may generally mean at least a part of any grounding plane, grounding plate, ground metal layer, or the like in an electronic device (like a mobile phone), or at least a part of any combination of the foregoing grounding plane, grounding plate, ground component, or the like. The "ground" may be configured to ground components in the electronic device. In an embodiment, the "ground" may be a grounding plane of a circuit board of the electronic device, or may be a grounding plate formed by a middle frame of the electronic device or a ground metal layer formed by a metal film below a screen of the electronic device. In an embodiment, the circuit board may be a printed circuit board (printed circuit board, PCB), for example, an 8-layer board, a 10-layer board, or 12-layer to 14-layer boards having 8, 10, 12, 13, or 14 layers of conductive materials respectively, or an element that is separated and electrically insulated by a dielectric layer or an insulation layer like a glass fiber or a polymer. In an embodiment, the circuit board includes a dielectric substrate, a grounding plane, and a wiring layer. The wiring layer and the grounding plane are electrically connected through a via hole. In an embodiment, components such as a display, a touchscreen, an input button, a transmitter, a processor, a memory, a battery, a charging circuit, and a system-on-chip (system-on-chip, SoC) structure may be installed on or connected to the circuit board, or electrically connected to the wiring layer and/or the grounding plane in the circuit board. For example, a radio frequency source is disposed at the wiring layer.

Any of the foregoing grounding plane, or grounding plate, or ground metal layer is made of a conductive material. In an embodiment, the conductive material may be any one of the following materials: copper, aluminum, stainless steel, brass and alloys thereof, copper foil on insulation laminates, aluminum foil on insulation laminates, gold foil on insulation laminates, silver-plated copper, silver-plated copper foil on insulation laminates, silver foil on insulation laminates and tin-plated copper, cloth impregnated with graphite powder, graphite-coated laminates, copper-plated laminates, brass-plated laminates and aluminum-plated laminates. A person skilled in the art may understand that the grounding plane/grounding plate/ground metal layer may alternatively be made of other conductive materials.

The following describes technical solutions of embodiments in this application with reference to accompanying drawings.

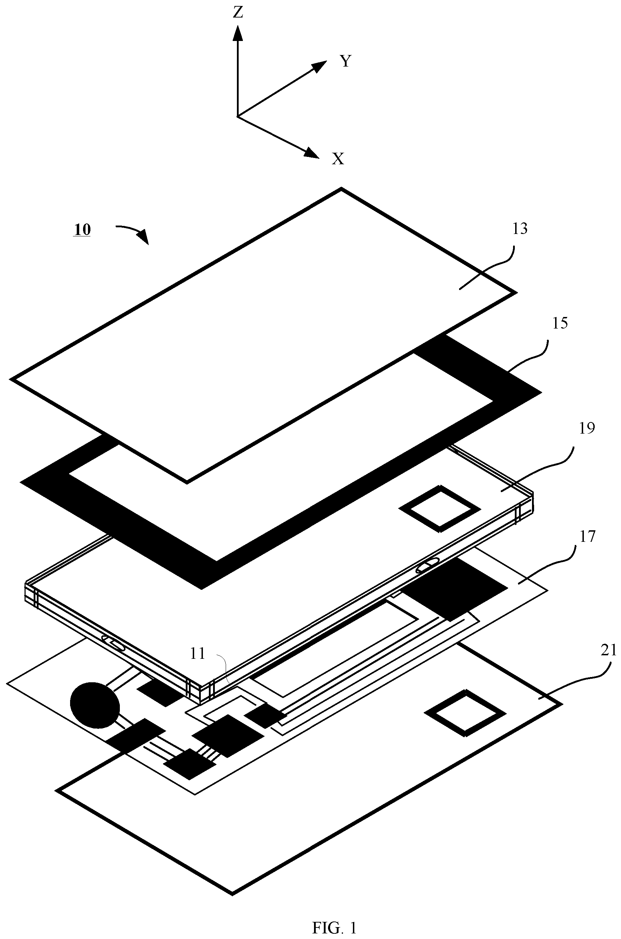

As shown in FIG. 1, an electronic device 10 may include a cover (cover) 13, a display (display) module 15, a printed circuit board (printed circuit board, PCB) 17, a middle frame (middle frame) 19, and a rear cover (rear cover) 21. It should be understood that, in some embodiments, the cover 13 may be cover glass (cover glass), or may be replaced with a cover of another material, for example, a polyethylene terephthalate (Polyethylene terephthalate, polyethylene terephthalate PET) cover.

The cover 13 may be tightly attached to the display module 15, and may be mainly configured to protect the display module 15 against dust.

In an embodiment, the display module 15 may include a liquid crystal display (liquid crystal display, LCD), a light-emitting diode (light-emitting diode, LED) display panel, an organic light-emitting diode (organic light-emitting diode, OLED) display panel, or the like. This is not limited in embodiments of this application.

The middle frame 19 is mainly used to support the entire electronic device. FIG. 1 shows that the PCB 17 is disposed between the middle frame 19 and the rear cover 21. It should be understood that, in an embodiment, the PCB 17 may alternatively be disposed between the middle frame 19 and the display module 15. This is not limited in embodiments of this application. The printed circuit board PCB 17 may be a flame-resistant material (FR-4) dielectric plate, or may be a Rogers (Rogers) dielectric plate, or may be a hybrid dielectric plate of Rogers and FR-4, or the like. Herein, FR-4 is a grade designation of a flame-resistant material, and the Rogers dielectric plate is a high-frequency board. An electronic element, for example, a radio frequency chip, is carried on the PCB 17. In an embodiment, a metal layer may be disposed on the printed circuit board PCB 17. The metal layer may be configured to ground the electronic element carried on the printed circuit board PCB 17, or may be configured to ground another element, for example, a support antenna or a side frame antenna. The metal layer may be referred to as a ground plane, a grounding plate, or a grounding plane. In an embodiment,

EP 4 621 991 A1

the metal layer may be formed by etching metal on a surface of any dielectric plate in the PCB 17. In an embodiment, the metal layer configured for grounding may be disposed on a side that is of the printed circuit board PCB 17 and that is close to the middle frame 19. In an embodiment, an edge of the printed circuit board PCB 17 may be considered as an edge of the grounding plane of the PCB 17. In an embodiment, the metal middle frame 19 may also be configured to ground the foregoing element. The electronic device 10 may further have another ground plane/grounding plate/grounding plane. As described above, details are not described herein again.

The electronic device 10 may further include a battery (not shown in the figure). The battery may be disposed between the middle frame 19 and the rear cover 21, or may be disposed between the middle frame 19 and the display module 15. This is not limited in embodiments of this application. In some embodiments, the PCB 17 is divided into a mainboard and a sub-board. The battery may be disposed between the mainboard and the sub-board. The mainboard may be disposed between the middle frame 19 and an upper edge of the battery, and the sub-board may be disposed between the middle frame 19 and a lower edge of the battery.

The electronic device 10 may further include a side frame 11. The side frame 11 may be made of a conductive material like metal. The side frame 11 may be disposed between the display module 15 and the rear cover 21, and circumferentially extends around a periphery of the electronic device 10. The side frame 11 may have four sides surrounding the display module 15, to help fasten the display module 15. In an implementation, the side frame 11 made of a metal material may be directly used as a metal side frame of the electronic device 10 to form an appearance of the metal side frame, and is applicable to a metal industrial design (industrial design, ID). In another implementation, an outer surface of the side frame 11 may alternatively be made of a material other than metal, for example, a plastic side frame, to form an appearance of a non-metal side frame, and is applicable to a non-metal ID.

The middle frame 19 may include the side frame 11, and the middle frame 19 including the side frame 11 is used as an integrated part, and may support an electronic component in the entire electronic device. The cover 13 and the rear cover 21 respectively fit upper edges and lower edges of the side frame, to enclose a casing or a housing (housing) of the electronic device. In an embodiment, the cover 13, the rear cover 21, the side frame 11, and/or the middle frame 19 may be collectively referred to as a casing or a housing of the electronic device 10. It should be understood that the "casing or housing" may be used to refer to a part or all of any one of the cover 13, the rear cover 21, the side frame 11, and the middle frame 19, or refer to a part or all of any combination of the cover 13, the rear cover 21, the side frame 11, and the middle frame 19.

At least a part of the side frame 11 on the middle frame 19 may serve as a radiator of an antenna to transmit/receive a radio frequency signal. A slot may exist between the part of the side frame that serves as the radiator and another part of the middle frame 19, to ensure that the radiator of the antenna has a good radiation environment. In an embodiment, the middle frame 19 may be provided with an aperture at the part of side frame that serves as the radiator, to facilitate radiation of the antenna.

Alternatively, the side frame 11 may not be considered as a part of the middle frame 19. In an embodiment, the side frame 11 may be connected to the middle frame 19 and integrally formed. In another embodiment, the side frame 11 may include a protruding part extending inward, to be connected to the middle frame 19, for example, connected by using an elastic sheet or a screw, or connected through soldering. The protruding part of the side frame 11 may be further configured to receive a feed signal, so that at least a part of the side frame 11 serves as a radiator of an antenna to receive/transmit a radio frequency signal. A slot 42 may exist between the middle frame 30 and the part of the side frame that serves as the radiator, to ensure that the radiator of the antenna has a good radiation environment, and the antenna has a good signal transmission function.

The rear cover 21 may be a rear cover made of a metal material, or may be a rear cover made of a non-conductive material, for example, may be a non-metal rear cover like a glass rear cover and a plastic rear cover, or may be a rear cover made of both a conductive material and a non-conductive material.

The antenna of the electronic device 10 may be further disposed in the side frame 11. When the side frame 11 of the electronic device 10 is made of a non-conductive material, the radiator of the antenna may be located in the electronic device 10 and disposed along the side frame 11. For example, the radiator of the antenna is disposed close to the side frame 11, to reduce a volume occupied by the radiator of the antenna as much as possible, and is closer to the outside of the electronic device 10, to achieve better signal transmission effect. It should be noted that, that the radiator of the antenna is disposed close to the side frame 11 means that the radiator of the antenna may be tightly attached to the side frame 11, or may be disposed close to the side frame 11. For example, there may be a specific small slot between the radiator of the antenna the side frame 11.

The antenna of the electronic device 10 may further be disposed in the casing, for example, a support antenna or a millimeter-wave antenna (not shown in FIG. 1). Clearance of the antenna disposed in the housing may be obtained by using a slit/hole in any one of the middle frame, and/or the side frame, and/or the rear cover, and/or the display, or by using a non-conductive slot/aperture formed between any several of the middle frame, and/or the side frame, and/or the rear cover, and/or the display. The clearance of the antenna may be provided, to ensure radiation performance of the antenna. It should be understood that, the clearance of the antenna may be a non-conductive area formed by any conductive component in the electronic device 10, and the antenna radiates a signal to external space through the non-conductive area. In an embodiment, the antenna 40 may be an antenna form based on a flexible mainboard (flexible printed circuit, FPC), an antenna form based on laser-direct-structuring (laser-direct-structuring, LDS), or an antenna form such as a microstrip antenna (microstrip disk antenna, MDA). In an embodiment, the antenna may alternatively use a transparent structure embedded into a display of the electronic device 10, so that the antenna is a transparent antenna element embedded into the display of the electronic device 10.

FIG. 1 shows only an example of some parts included in the electronic device 10. Actual shapes, actual sizes, and actual structures of the parts are not limited to those in FIG. 1.

It should be understood that, in embodiments of this application, it may be considered that a surface on which the display of the electronic device is located is a front surface, a surface on which the rear cover is located is a rear surface, and a surface on which the side frame is located is a side surface.

It should be understood that, in embodiments of this application, it is considered that when a user holds the electronic device (the user usually holds the electronic device vertically and faces the screen), an orientation in which the electronic device is located has a top part, a bottom part, a left part, and a right part. It should be understood that, in embodiments of this application, it is considered that when a user holds the electronic device (the user usually holds the electronic device vertically and faces the screen), an orientation in which the electronic device is located has a top part, a bottom part, a left part, and a right part.

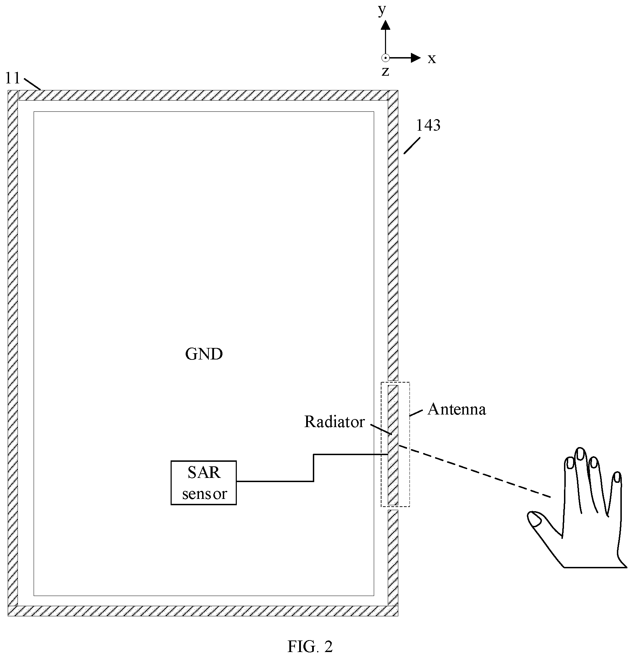

To meet legal and regulatory requirements for a SAR, an SAR sensor (sensor) is usually set in the electronic device. The SAR sensor is electrically connected to the radiator of the antenna, as shown in FIG. 2. When the SAR sensor determines that a human body approaches, the radio frequency chip reduces a transmit power of the antenna, so that a SAR of the antenna meets laws and regulations.

After the SAR sensor identifies that the human body approaches the radiator, the radio frequency chip reduces the transmit power of the antenna, to reduce the SAR of the antenna.

It should be understood that, for the SAR, a SAR of a region closer to the radiator is higher, and the SAR gradually decreases as a distance between the region and the radiator increases.

When a sensing distance of the SAR sensor is short, and the SAR sensor may identify a position of the human body but still cannot meet the laws and regulations, the transmit power of the antenna needs to be forcibly reduced to meet the laws and regulations. As a result, radiation performance of the antenna in free space (free space, FS) deteriorates (in the FS, the antenna still needs to run at the forcibly reduced transmit power). When the sensing distance of the SAR sensor increases, the transmit power of the antenna may be reduced when a distance between the human body and a sensing body of the SAR sensor is a first distance. Beyond the first distance, the SAR meets the laws and regulations, and within the first distance, the SAR does not meet the laws and regulations. The laws and regulations are met through reduction in the transmit power of the antenna, to prevent the transmit power of the antenna from being forcibly reduced, so that a radiation feature of the antenna is improved. In this way, the electronic device obtains better communication performance.

The SAR sensor is a capacitive sensor, and detects whether the human body approaches by testing a variation of a capacitance value of equivalent capacitance between the sensing body and the human body. Currently, the electronic device uses the radiator of the antenna as the sensing body of the SAR sensor. When the human body approaches, a quasi-parallel-plate-capacitor may be formed between the human body and the radiator. When the SAR sensor detects that the variation of the capacitance value of the equivalent capacitance is greater than a threshold, it is determined that the human body approaches the first distance, and the transmit power of the antenna is reduced. When the human body is far away from the first distance, the SAR sensor detects that the variation of the capacitance value of the capacitor on a circuit is less than the threshold, and the transmit power of the antenna is restored.

Therefore, for the SAR sensor, when the human body is at a same distance from the radiator, a larger equivalent inductance value of the quasi-parallel-plate-capacitor formed between the human body and the radiator indicates a larger variation of a capacitance value of the quasi-parallel-plate-capacitor formed between the human body and the radiator during approaching of the human body. At a same detection threshold of the SAR sensor, the sensing distance of the SAR sensor is longer.

In a current trend of industrial design (industrial design, ID), a thickness of the electronic device is reduced. With advent of the fifth generation mobile communication technology (5th generation wireless systems, 5G), a quantity of antennas further increases. Space reserved in the electronic device for the antenna to be provided with the radiator is increasingly smaller, and an area of the radiator is limited. Because the area of the radiator is small, when the radiator is used as a sensing body of the SAR sensor, in a case of the same distance, the capacitance value of the quasi-parallel-plate-capacitor formed between the radiator and the human body is small, and during approaching of the human body, the capacitance value changes slightly. Consequently, the sensing distance of the SAR sensor is short. Therefore, how to increase the sensing distance of the SAR sensor when the area of the radiator is limited is an urgent problem to be resolved.

An embodiment of this application provides an electronic device, including a radiator, a metal piece, and a first sensor. A SAR sensor is electrically connected to the radiator, and a metal piece is disposed near the radiator to increase a sensing distance of the SAR sensor, so that the electronic device obtains better communication performance.

It should be understood that, for brevity of description, only the SAR sensor is used as an example for description in embodiments of this application. During actual application, the technical solutions provided in embodiments of this application may also be applied to another sensor that reuses a radiator of an antenna as a sensing body of the sensor, for example, a capacitive sensor. In an embodiment, the first sensor may be a distance sensor, and a distance from a target object is determined based on a variation of a capacitance value between the sensing body and the target object.

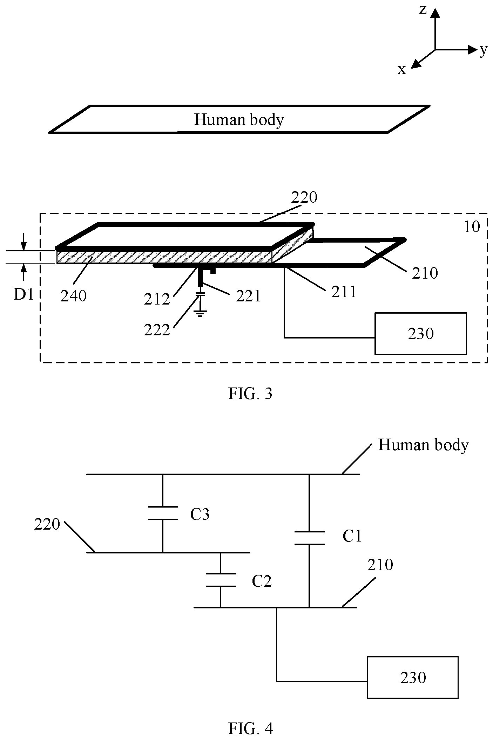

FIG. 3 is a diagram of a layout of a first sensor according to an embodiment of this application. The first sensor may be disposed in the electronic device 10 shown in FIG. 1.

As shown in FIG. 3, the electronic device 10 may include a radiator 210, a metal piece 220, and a first sensor 230.

A first end and a second end of the radiator 210 are open ends.

The metal piece 220 and the radiator 210 are spaced apart in a first direction, and do not completely overlap in the first direction. In an embodiment, the first direction is a thickness direction of the radiator 210, for example, a z direction.

It should be understood that a thickness of the radiator 210 may be understood as a size with a smallest value in three-dimensional dimensions of the radiator 210. The thickness direction may be understood as that a size of the radiator 210 in this direction is a thickness. In an embodiment, the thickness direction may also be understood as a direction perpendicular to a plane on which a length and a width are located.

In an embodiment, the first direction is a direction in which the metal piece 220 and the radiator 210 are spaced apart. The spacing direction may be understood as an extension direction of a shortest spacing between the metal piece 220 and the radiator 210. In an embodiment, when any two sizes in the three-dimensional dimensions of the radiator 210 are approximately the same (for example, a value difference is within 30%), for the first direction, refer to the foregoing understanding.

The first sensor 230 is electrically connected to the radiator 210. In an embodiment, the radiator 210 includes a first connection point 211. The first sensor 230 is electrically connected to the first connection point 211.

A spacing D1 between the radiator 210 and the metal piece 220 in the first direction is greater than or equal to 0.1 mm and less than or equal to 5 mm. In an embodiment, the spacing D1 between the radiator 210 and the metal piece 220 in the first direction is greater than or equal to 0.2 mm and less than or equal to 5 mm. It should be understood that when the spacing D1 is within the foregoing range, the first sensor 230 has a good sensing distance. This can also facilitate a layout of the metal piece 220 and the radiator 210.

It should be understood that, according to the technical solution provided in this embodiment of this application, the first sensor senses a first related parameter of the electronic device by using the radiator and the metal piece. In an embodiment, the first related parameter of the electronic device is related to a degree to which a human body approaches the electronic device. For example, the first related parameter may indicate a distance between the human body and the electronic device. In an embodiment, the metal piece 220 is spaced from and at least partially overlapped with the radiator 210 in the first direction, to increase an area of a sensing body of the first sensor 230, so that an equivalent capacitance value between the human body and the sensing body is increased (when the human body is at a same distance from the radiator). After the equivalent capacitance value is increased, during approaching of the human body, a variation of the capacitance value increases, and the sensing distance of the first sensor 230 increases. After the sensing distance of the first sensor 230 increases, when the human body is far away from the electronic device, approaching of the human body may be sensed. When a distance between the human body and the sensing body is a first distance, a transmit power of an antenna formed by the radiator is reduced, to prevent the transmit power of the antenna from being forcibly reduced, so that a radiation feature of the antenna is improved. In this way, the electronic device can obtain better communication performance.

As shown in FIG. 4, after the metal piece 220 is disposed, the radiator 210 and the metal piece 220 at least partially overlap in the first direction, the radiator 210 is connected to the metal piece 220 in an indirect coupling manner, and the radiator 210 and the metal piece 220 may be jointly used as the sensing body of the first sensor 230. A quasi-parallel-plate-capacitor may be formed between a part of the radiator 210 and the human body with a capacitance value of C1. A quasi-parallel-plate-capacitor may be formed between a part of the radiator 210 and the metal piece 220 with a capacitance value of C2. A quasi-parallel-plate-capacitor may be formed between the metal piece 220 and the human body with a capacitance value of C3. After the metal piece 220 is disposed, the equivalent capacitance value between the human body and the sensing body is a capacitance value C4 obtained through cascading of the capacitance value C1, the capacitance value C2, and the capacitance value C3. When the metal piece 220 is not disposed (original state), the sensing body is only the radiator 210, and a capacitance value of a quasi-parallel-plate-capacitor formed between the radiator and the human body is C0. The capacitance value C4 is greater than C0. Therefore, after the metal piece 220 is disposed, the equivalent capacitance value between the human body and the sensing body increases. During approaching of the human body, the variation of the capacitance value increases, and the sensing distance of the first sensor 230 increases.

In an embodiment, the metal piece 220 may alternatively be used as a parasitic radiator of the antenna formed by the radiator 210, so that a resonance bandwidth of the antenna is extended, and/or system efficiency, radiation efficiency, or the like of the antenna is improved. In an embodiment, an electrical length L1 of the radiator 210 may be approximately the same as an electrical length L2 of the metal piece 220 (L1×90%≤L2≤L1×110%). The metal piece 220 may be configured to generate second resonance, and the second resonance is close to first resonance that the radiator 210 is configured to generate, to extend a resonance bandwidth of the antenna in an operating frequency band corresponding to the first resonance and/or improve antenna efficiency. Alternatively, in an embodiment, an electrical length L1 of the radiator 210 is different from an electrical length L2 of the metal piece 220, to generate additional resonance, so that the antenna may include another communication frequency band. This is not limited in embodiments of this application.

In an embodiment, the electronic device may further include an elastic sheet 221 and a capacitor 222, as shown in FIG. 3. A first end of the elastic sheet 221 is coupled to the radiator 210, and the capacitor 222 is electrically connected between a second end of the elastic sheet 221 and a ground plane.

In an embodiment, the radiator 210 may further include a second connection point 212. The first end of the elastic sheet 221 is coupled to the second connection point 212 (for example, the second connection point 212 presses against the radiator 210).

It should be understood that a capacitor (or another electronic element equivalent to a capacitor) needs to be disposed between the radiator 210 and the ground plane. In this way, the first sensor 230 is isolated from the ground plane (an electrical signal transmitted by the first sensor 230 is a low-frequency signal, which is equivalent to an open circuit at the capacitor), and is not directly electrically connected to the ground plane, so that the first sensor 230 works normally. It should be understood that, for brevity of description, in this embodiment of this application, only the direct electrical connection between the first end of the elastic sheet 221 and the second connection point 212 is used as an example for description. However, an electrical connection manner between the first end of the elastic sheet 221 and the second connection point 212 is not limited and may be, for example, an indirect coupling connection.

In an embodiment, a capacitance value (an equivalent capacitance value) of the capacitor 222 may be less than or equal to 2 pF, and a circuit between the first sensor 230 and the ground plane is an open circuit, so that the first sensor 230 works normally.

In an embodiment, a first end and a second end of the metal piece 220 are open ends. The metal piece 220 is not directly electrically connected to the ground plane. Similarly, refer to the foregoing embodiment. When an electrical connection relationship between the metal piece 220 and the ground plane is required, a capacitor needs to be disposed between the metal piece 220 and the ground plane, and the metal piece 220 is isolated from the ground plane, so that the metal piece 220 may be used as a sensing body.

In an embodiment, the metal piece 220 may be of a sheet structure (for example, a metal sheet).

In an embodiment, the metal piece 220 may be a coating (for example, a metal coating) on a bracket.

In an embodiment, the metal piece 220 may be implemented as a partial structure of a middle frame.

It should be understood that, in the technical solution provided in this embodiment of this application, the metal piece 220 may be of a regular geometric structure, for example, may be rectangular, circular, or triangular, or may be in an irregular shape. This is not limited in embodiments of this application.

In an embodiment, a filter circuit may be further disposed between the first connection point 211 and the first sensor 230. The filter circuit may be configured to filter out a high-frequency electrical signal on the radiator 210, to avoid impact on the first sensor 230. In addition, the first sensor 230 may alternatively be isolated from the radiator 210, to prevent the first sensor 230 from affecting radiation generated by the radiator 210. In an embodiment, the filter circuit includes a capacitor, an inductor, and the like that are disposed in series or in parallel.

In an embodiment, the electronic device 10 may further include a dielectric plate 240, and the dielectric plate 240 may be located between the radiator 210 and the metal piece 220. In an embodiment, the radiator 210 and the metal piece 220 may be respectively disposed on two opposite surfaces of the dielectric plate 240.

It should be understood that, for a parallel plate capacitor, a formula for calculating a capacitance value of the parallel plate capacitor is as follows:

$$C = \frac{\varepsilon S}{4\pi kd}$$

ε is a dielectric constant of a medium between two plates of the capacitor (conductors (for example, a human body, a radiator, and a metal piece) on both sides of the parallel plate capacitor); δ is an absolute dielectric constant in vacuum; k is an electrostatic constant; S indicates an area of overlap (an overlapping area in the first direction) of the two plates; and d indicates a vertical distance (a distance in the first direction) between the two plates.

The dielectric plate 240 is disposed between the radiator 210 and the metal piece 220, so that the capacitance value C2 of the quasi-parallel-plate-capacitor that may be formed between the part of the radiator 210 and the metal piece 220 can be adjusted, to change the equivalent capacitance value C4 between the human body and the sensing body.

When a projected area S2 of the metal piece in the first direction is the same as a projected area S1 of the radiator in the first direction (S1:S2=1:1) and a spacing D1 between the metal piece 220 and the radiator 210 in the first direction is 0.2 mm, the sensing distance, of the first sensor 230, existing as an overlap rate x of the metal piece 220 and the radiator 210 in the first direction changes is shown in Table 1. The overlap rate x may be understood as a ratio of an overlapping area S3 between the radiator 210 and the metal piece 220 in the first direction to the projected area S1 of the radiator 210 in the first direction.

It should be understood that, for brevity of description, in this embodiment of this application, the projected area in the first direction may be understood as an area of a projection formed through projection in the first direction onto a plane perpendicular to the first direction.

Table 1

| | Original state | A metal piece is disposed (D1=0.2 mm) | | | | | |
|---|---|---|---|---|---|---|---|
| Overlap rate | / | x=1 | x=2/3 | x=1/2 | x=1/3 | x=1/5 | x=1/10 |
| Sensing distance (mm) | 11 | 12-13 | 13-14 | 14-15 | 15-16 | 15-16 | 11-12 |

It should be understood that, according to the foregoing formula for calculating the capacitance value of the parallel plate capacitor, when the overlap rate x changes, an area of overlap of two plates of a quasi-parallel-plate-capacitor formed between the part of the radiator 210 and the human body and an area of overlap of two plates of a quasi-parallel-plate-capacitor formed between the part of the radiator 210 and the metal piece 220 change, so that the capacitance value C1 and the capacitance value C2 change. The equivalent capacitance value C4 between the human body and the sensing body is determined based on the cascaded capacitance value C1, capacitance value C2, and capacitance value C3. Therefore, the equivalent capacitance value C4 between the human body and the sensing body changes with the overlap rate x.

As shown in Table 1, in a process in which the coverage rate x increases from 0.1 to 1, the sensing distance of the first sensor 230 first increases and then decreases, but is improved compared with that in the original state.

In an embodiment, the ratio (overlap rate x) of the overlapping area S3 between the radiator 210 and the metal piece 220 in the first direction to the projected area S1 of the radiator in the first direction is greater than or equal to 0.1 and less than or equal to 0.9.

In an embodiment, the ratio (overlap rate x) of the overlapping area S3 between the radiator 210 and the metal piece 220 in the first direction to the projected area S1 of the radiator in the first direction is greater than 0.1 and less than or equal to 0.5.

It should be understood that when the overlap rate x is within the foregoing range, the first sensor 230 can have a good sensing distance. This can also facilitate a layout of the metal piece 220 and the radiator 210.

When the projected area S2 of the metal piece 220 in the first direction is the same as the projected area S1 of the radiator 210 in the first direction (S1:S2=1:1) and the overlap rate x of the metal piece 220 and the radiator 210 in the first direction is 0.5 and 1, the sensing distance, of the first sensor 230, existing as the spacing D1 between the metal piece 220 and the radiator 210 in the first direction changes is shown in Table 2 and Table 3.

Table 2

| | Original state | X=0.5 | | | |
|---|---|---|---|---|---|
| D1 (mm) | / | 0.2 | 1 | 1.5 | 2 |
| Sensing distance (mm) | 11 | 14 | 14 | 14-15 | 14-15 |

Table 3

| | Original state | X=1 | | | | |
|---|---|---|---|---|---|---|
| D1 (mm) | / | 0.2 | 0.5 | 1 | 1.5 | 2 |
| Sensing distance (mm) | 11 | 12 | 12-13 | 13-14 | 14-15 | 15-16 |

It should be understood that, according to the foregoing formula for calculating the capacitance value of the parallel plate capacitor, when the spacing D1 changes, the distance between the two plates of the quasi-parallel-plate-capacitor formed between the part of the radiator 210 and the metal piece 220 changes, so that the capacitance value C2 changes. The equivalent capacitance value C4 between the human body and the sensing body is determined based on the cascaded capacitance value C1, capacitance value C2, and capacitance value C3. Therefore, the equivalent capacitance value C4 between the human body and the sensing body changes with the spacing D1.

As shown in Table 2 and Table 3, when the coverage rate x=0.5, the spacing D1 has small impact on the sensing distance of the first sensor 230; and when the coverage rate increases to 1, a larger spacing D1 indicates a longer sensing distance of the first sensor 230. The sensing distance is increased compared with that in the original state.

When the overlap rate x of the metal piece 220 and the radiator 210 in the first direction is 1, the spacing D1=0.2 mm, and the projected area S2 of the metal piece 220 in the first direction is further increased, the sensing distance of the first sensor 230 is shown in Table 4.

Table 4

| | Original state | X=1 | | |
|---|---|---|---|---|
| S2:S1 | / | 1 | 2 | 3 |
| Sensing distance (mm) | 11 | 12-13 | 15-16 | 18-19 |

It should be understood that, according to the foregoing formula for calculating the capacitance value of the parallel plate capacitor, when the projected area S2 of the metal piece 220 in the first direction changes, an area of overlap of two plates of a quasi-parallel-plate-capacitor formed between a part of the metal piece 220 and the human body and the area of overlap of the two plates of the quasi-parallel-plate-capacitor formed between the part of the radiator 210 and the metal piece 220 change, so that the capacitance value C3 and the capacitance value C2 change. The equivalent capacitance value C4 between the human body and the sensing body is determined based on the cascaded capacitance value C1, capacitance value C2, and capacitance value C3. Therefore, the equivalent capacitance value C4 between the human body and the sensing body changes with the overlap rate x.

As shown in Table 4, as the projected area S2 of the metal piece 220 in the first direction increases, the sensing distance of the first sensor is longer, and is improved compared with that in the original state.

In an embodiment, a ratio of the projected area S1 of the radiator 210 in the first direction to the projected area S2 of the metal piece 220 in the first direction is greater than or equal to one-fifth and less than or equal to 2. In an embodiment, the ratio of the projected area S1 of the radiator 210 in the first direction to the projected area S2 of the metal piece 220 in the first direction is greater than or equal to one-third and less than or equal to 2.

It should be understood that when the ratio of the projected area S1 of the radiator 210 in the first direction to the projected area S2 of the metal piece 220 in the first direction is within the foregoing range, the first sensor 230 has a good sensing distance. This can also facilitate a layout of the metal piece 220 and the radiator 210.

In an embodiment, a ratio of the overlapping area S3 between the radiator 210 and the metal piece 220 in the first direction to the projected area S2 of the metal piece in the first direction is greater than or equal to 0.02 and less than or equal to 1. In an embodiment, the ratio of the overlapping area S3 between the radiator 210 and the metal piece 220 in the first direction to the projected area S2 of the metal piece in the first direction is greater than or equal to 0.2 and less than or equal to 0.8.

It should be understood that, when the ratio of the overlapping area S3 between the radiator 210 and the metal piece 220 in the first direction to the projected area S2 of the metal piece in the first direction is within the foregoing range, the first sensor 230 has a good sensing distance. This can also facilitate a layout of the metal piece 220 and the radiator 210.

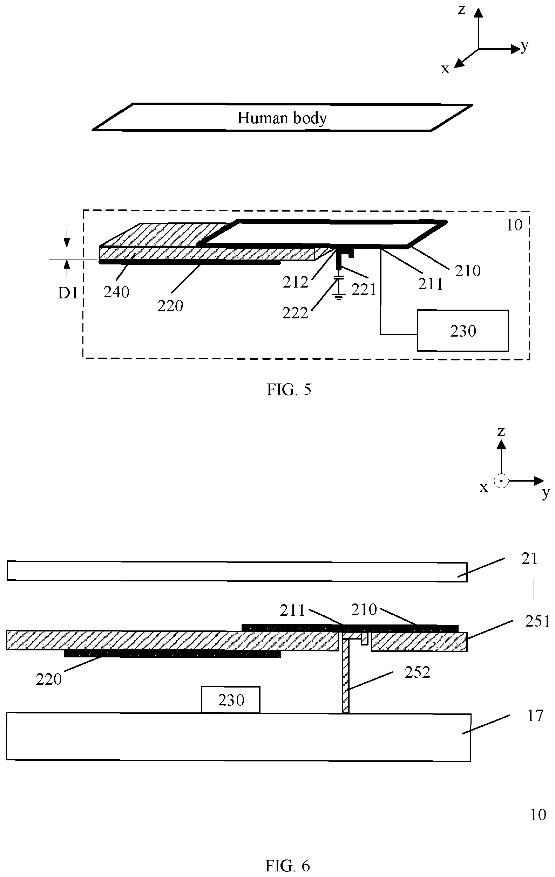

FIG. 5 is a diagram of another layout of a first sensor according to an embodiment of this application.

It should be understood that a difference between the diagram of the layout shown in FIG. 5 and the diagram of the layout shown in FIG. 3 lies only in a relative position relationship between the radiator 210 and the metal piece 220. In the diagram of the layout shown in FIG. 3, the metal piece 220 is located between the radiator 210 and the human body (the metal piece 220 is located in a positive direction of a z-axis of the radiator 210 (a direction perpendicular to a plane on which the radiator is located)). In the diagram of the layout shown in FIG. 5, the radiator 210 is located between the metal piece 220 and the human body (the metal piece 220 is located in a negative direction of the z-axis of the radiator 210).

When the radiator 210 is located between the metal piece 220 and the human body, the radiator 210 and the metal piece 220 may also be jointly used as a sensing body of the first sensor 230, and a cascaded parallel plate capacitor structure similar to that shown in FIG. 4 may be formed. A quasi-parallel-plate-capacitor may be formed between the radiator 210 and the human body with a capacitance value of C1. A quasi-parallel-plate-capacitor may be formed between the radiator 210 and a part of the metal piece 220 with a capacitance value of C2. A quasi-parallel-plate-capacitor may be formed between a part of the metal piece 220 and the human body with a capacitance value of C3. After the metal piece 220 is disposed, an equivalent capacitance value between the human body and the sensing body is a capacitance value C4 obtained through cascading of the capacitance value C1, the capacitance value C2, and the capacitance value C3. When the metal piece 220 is not disposed (original state), the sensing body is only the radiator 210, and a capacitance value of a quasi-parallel-plate-capacitor formed between the radiator and the human body is C0. The capacitance value C4 is greater than C0.

When a projected area S2 of the metal piece in the first direction is the same as a projected area S1 of the radiator in the first direction (S1:S2=1:1) and a spacing D1 between the metal piece 220 and the radiator 210 in the first direction is 1 mm, the sensing distance, of the first sensor 230, existing as an overlap rate x of the metal piece 220 and the radiator 210 in the first direction changes is shown in Table 5.

Table 5

|  | Original state | A metal piece is disposed (D1=1 mm) | | | |
|---|---|---|---|---|---|
| Overlap rate | / | x=1/2 | x=1/3 | x=1/8 | x=1/15 |
| Sensing distance (mm) | 11 | 12 | 13 | 13 | 12-13 |

As shown in Table 5, in a process in which the coverage rate x increases from 1/15 to 1/2, the sensing distance of the first sensor 230 first increases and then decreases, but is improved compared with that in the original state.

FIG. 6 to FIG. 8 are diagrams of structures of an electronic device 10 according to an embodiment of this application.

It should be understood that, in the foregoing embodiment, the radiator 210 and the metal piece 220 may be disposed on a same side of the PCB 17. In the diagram of the layout shown in FIG. 3, the metal piece 220 is located between the radiator 210 and the human body (the metal piece 220 is located in a positive direction of a z-axis of the radiator 210 (a direction perpendicular to a plane on which the radiator is located)), and it may be understood that a distance between the radiator 210 and the PCB 17 is less than a distance between the metal piece 220 and the PCB 17. In the diagram of the layout shown in FIG. 5, the radiator 210 is located between the metal piece 220 and the human body (the metal piece 220 is located in a negative direction of the z-axis of the radiator 210), and it may be understood that the distance between the radiator 210 and the PCB 17 is greater than the distance between the metal piece 220 and the PCB 17.

As shown in FIG. 6, the electronic device 10 may include a bracket 251. The radiator 210 is located on a first surface of the bracket 251, and the metal piece 220 is located on a second surface of the bracket 251. The layout shown in FIG. 3 may correspond to a case in which the first surface is a surface that is of the bracket 251 and that is close to the PCB 17. A layout shown in FIG. 6 may correspond to a case in which the first surface is a surface that is of the bracket 251 and that is away from the PCB 17.

It should be understood that, for brevity of description, in the structures shown in FIG. 6 to FIG. 8, only an example in which the distance between the radiator 210 and the PCB 17 is greater than the distance between the metal piece 220 and the PCB 17 (the layout shown in FIG. 5) is used for description. During actual application, relative positions of the radiator 210 and the metal piece 220 may be adjusted to form the layout shown in FIG. 3. This is not limited in embodiments of this application.

In an embodiment, the first sensor 230 may be located on the PCB 17, and is electrically connected to the first connection point 211 by using an elastic sheet 252.

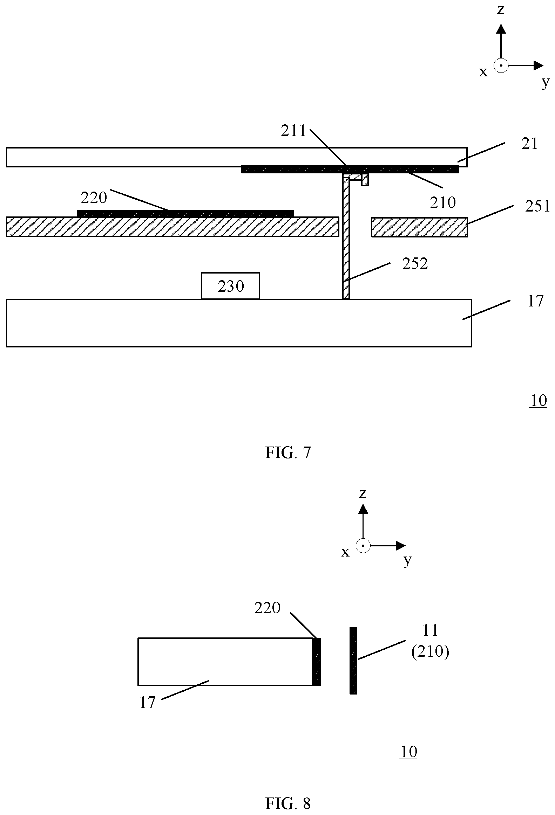

As shown in FIG. 7, the radiator 210 is located on a surface of the rear cover 21, and the metal piece 220 is located on a surface of the bracket 251.

In an embodiment, the radiator 210 may alternatively be located on the surface of the bracket 251, and the metal piece 220 is located on the surface of the rear cover 21. It should be understood that a difference between an electronic device 10 shown in FIG. 7 and the electronic device 10 shown in FIG. 6 lies only in that the radiator 210 is disposed at different positions.

As shown in FIG. 8, the radiator 210 may include at least a part of the side frame 11. In an embodiment, the metal piece 220 is located on a surface that is of the PCB 17 and that is opposite to the radiator 210 (the metal piece 220 is located in a negative direction of a y-axis of the radiator 210). In an embodiment, the metal piece 220 is located between the PCB 17 and the radiator 210.

In an embodiment, the metal piece 220 includes at least a part of a first side frame between a first position and a second position. The radiator 210 is located on the surface that is of the PCB 17 and that is opposite to the radiator 210 (the metal piece 220 is located in a positive direction of the y-axis of the radiator 210).

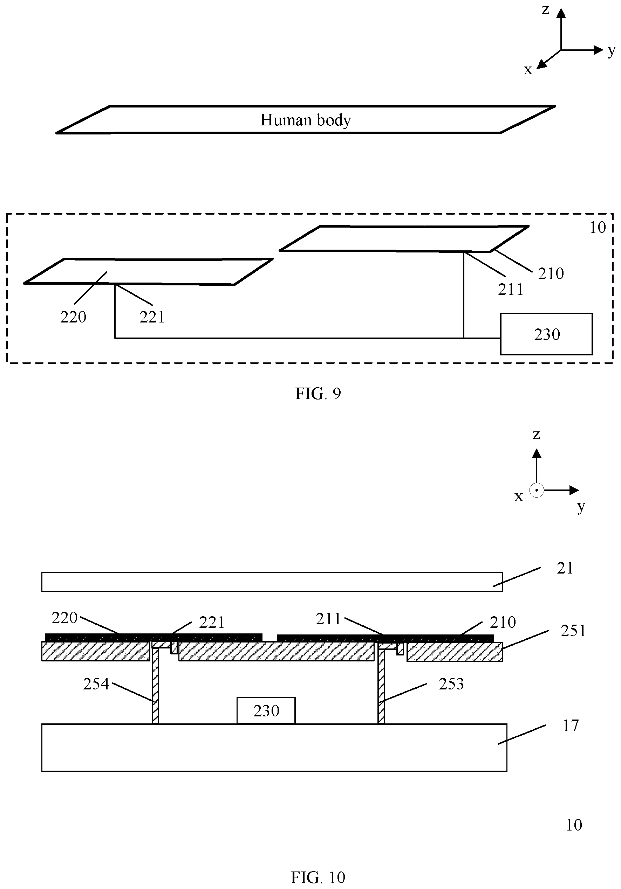

FIG. 9 is a diagram of another layout of a first sensor according to an embodiment of this application.

As shown in FIG. 9, an electronic device 10 may include a radiator 210, a metal piece 220, and a first sensor 230.

A first end and a second end of the radiator 210 are open ends.

At least a part of the metal piece 220 is disposed parallel to or coplanar with at least a part of the radiator 210.

The first sensor 230 is electrically connected to the radiator 210 and the metal piece 220. In an embodiment, the radiator 210 includes a first connection point 211. The metal piece 220 includes a second connection point 221. The first connection point 211 is electrically connected to the second connection point 221.

It should be understood that a difference between the diagram of the layout shown in FIG. 9 and the diagrams of the layout shown in the foregoing embodiments (as shown in FIG. 3 and FIG. 5) lies in only a relative position relationship between the radiator 210 and the metal piece 220 and an electrical connection relationship between the metal piece 220 and the first sensor 230.

In the diagrams of the layout shown in FIG. 3 and FIG. 5, the metal piece 220 and the radiator 210 at least partially overlap in a first direction. Through indirect coupling between the metal piece 220 and the radiator 210, the metal piece 220 and the radiator 210 are jointly used as a sensing body of the first sensor 230, to increase an area of the sensing body of the first sensor 230, so that an equivalent capacitance value between a human body and the sensing body is increased (when the human body is at a same distance from the radiator), and a sensing distance of the first sensor 230 is increased.

However, in the diagram of the layout shown in FIG. 9, the metal piece 220 disposed near the radiator 210 is electrically connected to the first sensor 230, and the metal piece 220 is also used as the sensing body of the first sensor 230, to increase the area of the sensing body of the first sensor 230, so that the equivalent capacitance value between the human body and the sensing body is increased (when the human body is at the same distance from the radiator), and the sensing distance of the first sensor 230 is increased.

In an embodiment, at least a part of the metal piece 220 does not overlap with at least a part of the radiator 210 in the first direction. When the at least a part of the metal piece 220 is disposed parallel to the at least a part of the radiator 210, the parallel parts of the metal piece 220 and the radiator 210 are parallel in a second direction and a third direction. The second direction is different from the third direction, and the first direction is a direction perpendicular to the second direction and the third direction, for example, a z direction. When the at least a part of the metal piece 220 is disposed coplanar with the at least a part of the radiator 210, the coplanar parts of the metal piece 220 and the radiator 210 are both located on a first plane, and the first direction is a direction perpendicular to the first plane, for example, a z direction.

In an embodiment, a distance between the metal piece 220 and the radiator 210 is less than or equal to a first threshold. In an embodiment, the first threshold may be 100 mm. In an embodiment, the first threshold may be 10 mm.

It should be understood that, that the metal piece 220 is parallel to the radiator 210 may be understood as that a plane on which the metal piece 220 is located is parallel to a plane on which the radiator 210 is located. The distance between the metal piece 220 and the radiator 210 may be understood as a shortest distance between projections of the metal piece 220 and the radiator 210 when the metal piece 220 and the radiator 210 are projected onto a same plane. The metal piece 220 and the radiator 210 may be arranged based on space inside the electronic device. For example, the metal piece 220 and the radiator 210 may be arranged along a long side of the electronic device, or may be disposed in adjacent regions (a distance between the adjacent regions is less than 10 mm).

In an embodiment, a ratio of an area S1' of the radiator 210 to an area S2' of the metal piece 220 is greater than or equal to one-fifth and less than or equal to 2. In an embodiment, the ratio of the area S1' of the radiator 210 to the area S2' of the metal piece 220 is greater than or equal to one-third and less than or equal to 2.

In an embodiment, a ratio of a projected area S1 of the radiator 210 in the first direction to a projected area S2 of the metal piece 220 in the first direction is greater than or equal to one-fifth and less than or equal to 2. In an embodiment, the ratio of the projected area S1 of the radiator 210 in the first direction to the projected area S2 of the metal piece 220 in the first direction is greater than or equal to one-third and less than or equal to 2.

It should be understood that, when the projected area (or an actual area) of the radiator 210 in the first direction remains unchanged, as the projected area (or an actual area) of the metal piece 220 in the first direction increases, a projected area (or an actual area) of the sensing body in the first direction increases, and the equivalent capacitance value between the human body and the sensing body increases (when the human body is at the same distance from the radiator), so that the sensing distance of the first sensor 230 increases. When the ratio of the projected area S1 (or the actual area) of the radiator 210 in the first direction to the projected area S2 (or the actual area) of the metal piece 220 in the first direction is within the foregoing range, the first sensor 230 has a good sensing distance. This can also facilitate a layout of the metal piece 220 and the radiator 210.

In an embodiment, the radiator 210 and the metal piece 220 may be located on a surface of a bracket 251 of the electronic device, as shown in FIG. 10.

In an embodiment, the first sensor 230 may be electrically connected to the first connection point 211 of the radiator 210 by using an elastic sheet 253. In an embodiment, the first sensor 230 may be electrically connected to the second connection point 221 of the metal piece 220 by using an elastic sheet 254.

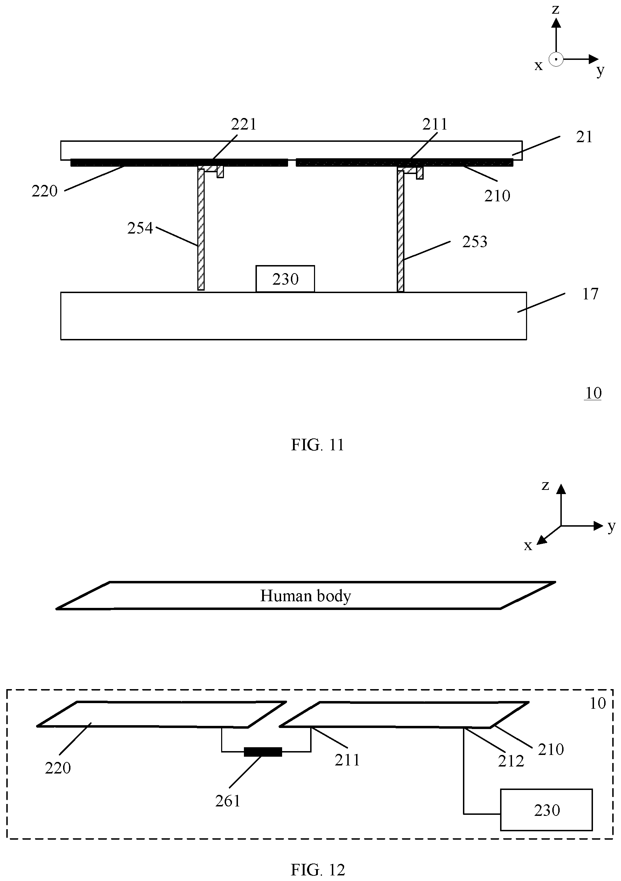

In an embodiment, the radiator 210 and the metal piece 220 may be located on a surface of a rear cover 21 of the electronic device, as shown in FIG. 11. It should be understood that a difference between an electronic device 10 shown in FIG. 11 and an electronic device 10 shown in FIG. 10 lies only in that the radiator 210 and the metal piece 220 are disposed at different positions.

FIG. 12 is a diagram of another layout of a first sensor according to an embodiment of this application.

As shown in FIG. 12, an electronic device 10 may include a radiator 210, a metal piece 220, an electronic element 261, and a first sensor 230.

A first end and a second end of the radiator 210 are open ends.

At least a part of the metal piece 220 is disposed parallel to or coplanar with at least a part of the radiator 210.

The electronic element 261 is electrically connected between the radiator 210 and the metal piece 220. The first sensor 230 is electrically connected to the radiator 210. In an embodiment, the radiator 210 includes a first connection point 211 and a second connection point 212. The electronic element 261 is electrically connected between the first connection point 211 and the metal piece 220. The first sensor 230 is electrically connected to the second connection point 212.

It should be understood that a difference between the diagram of the layout shown in FIG. 12 and the diagram of the layout shown in FIG. 9 lies only in an electrical connection relationship among the radiator 210, the metal piece 220, and the first sensor 230.

In the diagram of the layout shown in FIG. 9, the metal piece 220 disposed near the radiator 210 is electrically connected to the first sensor 230, and the metal piece 220 is also used as a sensing body of the first sensor 230, to increase an area of the sensing body of the first sensor 230, so that an equivalent capacitance value between a human body and the sensing body is increased (when the human body is at a same distance from the radiator), and a sensing distance of the first sensor 230 is increased.

However, in the diagram of the layout shown in FIG. 12, the metal piece 220 disposed near the radiator 210 is electrically connected to the radiator 210, and the radiator 210 and the metal piece 220 are also used as the sensing body of the first sensor 230, to increase the area of the sensing body of the first sensor 230, so that the equivalent capacitance value between the human body and the sensing body is increased (when the human body is at the same distance from the radiator), and the sensing distance of the first sensor 230 is increased.

In an embodiment, at least a part of the metal piece 220 does not overlap with at least a part of the radiator 210 in a first direction. When the at least a part of the metal piece 220 is disposed parallel to the at least a part of the radiator 210, the parallel parts of the metal piece 220 and the radiator 210 are parallel in a second direction and a third direction. The second direction is different from the third direction, and the first direction is a direction perpendicular to the second direction and the third direction, for example, a z direction. When the at least a part of the metal piece 220 is disposed coplanar with the at least a part of the radiator 210, the coplanar parts of the metal piece 220 and the radiator 210 are both located on a first plane, and the first direction is a direction perpendicular to the first plane, for example, a z direction.

In an embodiment, a distance between the metal piece 220 and the radiator 210 is less than or equal to a first threshold. In an embodiment, the first threshold may be 100 mm. In an embodiment, the first threshold may be 10 mm.

It should be understood that, that the metal piece 220 is parallel to the radiator 210 may be understood as that a plane on which the metal piece 220 is located is parallel to a plane on which the radiator 210 is located. The distance between the metal piece 220 and the radiator 210 may be understood as a shortest distance between projections of the metal piece 220 and the radiator 210 when the metal piece 220 and the radiator 210 are projected onto a same plane. The metal piece 220 and the radiator 210 may be arranged based on space inside the electronic device. For example, the metal piece 220 and the radiator 210 may be arranged along a long side of the electronic device, or may be disposed in adjacent regions (a distance between the adjacent regions is less than 10 mm).

In an embodiment, an equivalent inductance value of the electronic element is greater than or equal to 22 nH.

In an embodiment, a plurality of electronic elements are electrically connected between the first connection point 211 and the metal piece 220, and an equivalent inductance value obtained after the plurality of electronic elements are cascaded is greater than or equal to 22 nH. Alternatively, in an embodiment, the electronic element may alternatively be a filter circuit configured to filter out resonance generated by the radiator 210.

It should be understood that, because the electronic element 261 is disposed between the radiator 210 and the metal piece 220, when the radiator 210 generates the resonance, the electronic element 261 may isolate the radiator 210 from the metal piece 220, so that a circuit between the radiator 210 and the metal piece 220 is an open circuit, to avoid impact of the metal piece 220 on the resonance of the radiator 210.

In an embodiment, the equivalent inductance value of the electronic element is greater than or equal to 50 nH.

It should be understood that, an electrical length of the radiator 210 is changed, so that the resonance generated by the radiator is located in different frequency bands. When the resonance generated by the radiator is located at a low frequency (700 MHz to 960 MHz), isolation between the radiator 210 and the metal piece 220 requires a large equivalent inductance value of the electronic element 261, which is, for example, greater than or equal to 50 nH. However, when the resonance generated by the radiator is at a high frequency (for example, a sub-6 G frequency band), isolation between the radiator 210 and the metal piece 220 requires a small equivalent inductance value of the electronic element 261, which is, for example, greater than or equal to 22 nH.

In an embodiment, a ratio of an area S1' of the radiator 210 to an area S2' of the metal piece 220 is greater than or equal to one-fifth and less than or equal to 2. In an embodiment, the ratio of the area S1' of the radiator 210 to the area S2' of the metal piece 220 is greater than or equal to one-third and less than or equal to 2.

In an embodiment, a ratio of a projected area S1 of the radiator 210 in the first direction to a projected area S2 of the metal piece 220 in the first direction is greater than or equal to one-fifth and less than or equal to 2. In an embodiment, the ratio of the projected area S1 of the radiator 210 in the first direction to the projected area S2 of the metal piece 220 in the first direction is greater than or equal to one-third and less than or equal to 2.

It should be understood that, when the projected area (or an actual area) of the radiator 210 in the first direction remains unchanged, as the projected area (or an actual area) of the metal piece 220 in the first direction increases, the area of the sensing body increases, and the equivalent capacitance value between the human body and the sensing body increases (when the human body is at the same distance from the radiator), so that the sensing distance of the first sensor 230 increases. When the ratio of the projected area S1 (or the actual area) of the radiator 210 in the first direction to the projected area S2 (or the actual area) of the metal piece 220 in the first direction is within the foregoing range, the first sensor 230 has a good sensing distance. This can also facilitate a layout of the metal piece 220 and the radiator 210.

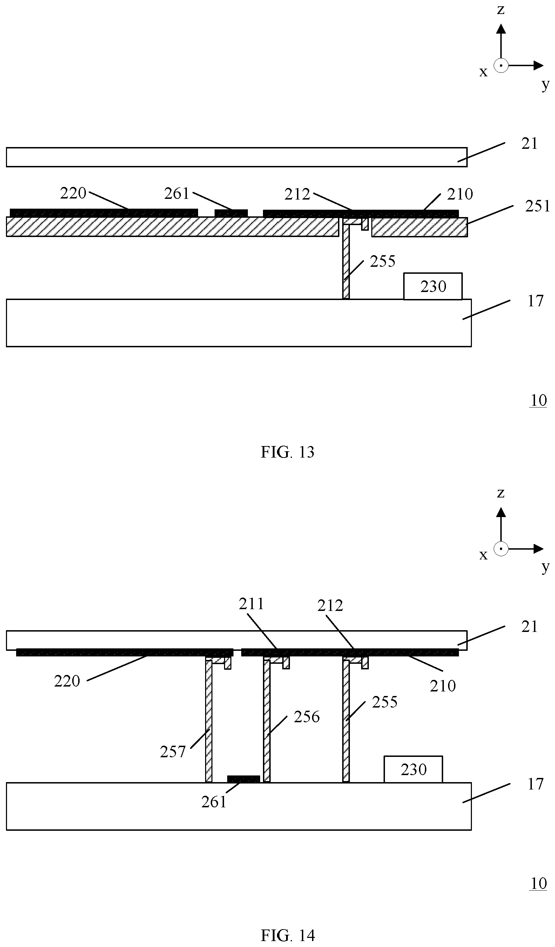

In an embodiment, the radiator 210 and the metal piece 220 may be located on a surface of a bracket 251 of the electronic device, as shown in FIG. 13. In an embodiment, the electronic element 261 may alternatively be disposed on the surface of the bracket 251.

In an embodiment, the first sensor 230 may be electrically connected to the second connection point 212 of the radiator 210 by using an elastic sheet 255.

In an embodiment, the radiator 210 and the metal piece 220 may be located on a surface of a rear cover 21 of the electronic device, as shown in FIG. 14. In an embodiment, the electronic element 261 may be disposed on a PCB 17, and is electrically connected between the first connection point 211 and the metal piece 220 by using an elastic sheet 256 and an elastic sheet 257. It should be understood that a difference between an electronic device 10 shown in FIG. 14 and an electronic device 10 shown in FIG. 13 lies only in that the electronic element 261, the radiator 210, and the metal piece 220 are disposed at different positions.

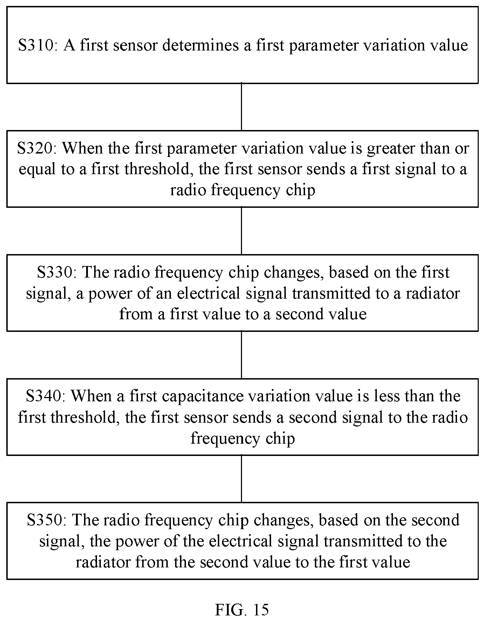

FIG. 15 is a flowchart of a power control method according to an embodiment of this application.

It should be understood that the control method may be applied to any electronic device 10 in the foregoing embodiments. The electronic device 10 further includes a radio frequency chip (RF IC) 260, and the radio frequency chip 260 is electrically connected to the first sensor 230. The radio frequency chip 260 is further coupled to the radiator 210, and is configured to feed an electrical signal into the radiator 210.

S310: The first sensor determines a first parameter variation value.

In an embodiment, the first sensor is a capacitive sensor, and a first parameter is a capacitance value or a capacitance-related parameter. For example, the first parameter variation value is a capacitance variation value. In an embodiment, the first sensor may determine a variation of a capacitance value of equivalent capacitance between a sensing body and a target object (human body), to determine a distance from the target object.

S320: When the first parameter variation value is greater than or equal to a first threshold, the first sensor sends a first signal to the radio frequency chip.

When the first parameter variation value determined by the first sensor is greater than or equal to the first threshold, it is determined that the distance from the target object is less than or equal to a first distance. In this case, the first sensor sends the first signal to the radio frequency chip, where the first signal may indicate the radio frequency chip to reduce a power of the electrical signal transmitted to the radiator.

S330: The radio frequency chip changes, based on the first signal, the power of the electrical signal transmitted to the radiator from a first value to a second value, where the second value is less than the first value.

After receiving the first signal, the radio frequency chip changes the power of the electrical signal transmitted to the radiator from the first value to the second value, so that a SAR generated by the radiator meets laws and regulations.

It should be understood that, in the foregoing embodiment, the first threshold, the first value, and the second value are all preset values, and may be adjusted according to different production or design requirements. This is not limited in embodiments of this application.

S340: When the first parameter variation value is less than the first threshold, the first sensor sends a second signal to the radio frequency chip.

When the first parameter variation value determined by the first sensor is less than the first threshold, it is determined that the distance from the target object is greater than the first distance. In this case, the first sensor sends the second signal to the radio frequency chip, where the second signal may indicate the radio frequency chip to increase the power of the electrical signal transmitted to the radiator.

S350: The radio frequency chip changes, based on the second signal, the power of the electrical signal transmitted to the radiator from the second value to the first value. After receiving the second signal, the radio frequency chip changes the power of the electrical signal transmitted to the radiator from the second value to the first value, to improve radiation performance of the radiator.

A person skilled in the art may use different methods to implement the described functions for each specific application, but such implementation should not be considered beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An electronic device, comprising:

   a radiator, comprising a first end and a second end, wherein the first end and the second end are open ends;
   a metal piece, wherein the metal piece and the radiator are spaced apart in a first direction, and do not completely overlap in the first direction; and
   a first sensor, wherein the first sensor is electrically connected to the radiator, wherein
   a spacing between the radiator and the metal piece in the first direction is greater than or equal to 0.1 mm and less than or equal to 5 mm.

2. The electronic device according to claim 1, wherein
   a ratio of a projected area S1 of the radiator in the first direction to a projected area S2 of the metal piece in the first direction is greater than or equal to one-fifth and less than or equal to 2.

3. The electronic device according to claim 1 or 2, wherein
   a ratio of an overlapping area S3 between the radiator and the metal piece in the first direction to the projected area S1 of the radiator in the first direction is greater than or equal to 0.1 and less than or equal to 0.9.

4. The electronic device according to any one of claims 1 to 3, wherein
   the ratio of the overlapping area S3 between the radiator and the metal piece in the first direction to the projected area S1 of the radiator in the first direction is greater than 0.1 and less than or equal to 0.5.

5. The electronic device according to any one of claims 1 to 4, wherein
   a ratio of the overlapping area S3 between the radiator and the metal piece in the first direction to the projected area S2 of the metal piece in the first direction is greater than or equal to 0.02 and less than or equal to 1.

6. The electronic device according to any one of claims 1 to 5, wherein

   the electronic device further comprises a printed circuit board PCB; and
   the radiator and the metal piece are disposed on a same side of the PCB.

7. The electronic device according to any one of claims 1 to 6, wherein

   the electronic device further comprises a bracket; and
   the radiator is located on a first surface of the bracket, and the metal piece is located on a second surface of the bracket.

8. The electronic device according to any one of claims 1 to 6, wherein

   the electronic device further comprises a bracket and a rear cover; and
   the radiator is located on a surface of the rear cover, and the metal piece is located on a surface of the bracket.

9. The electronic device according to claim 6, wherein

   the electronic device further comprises a conductive side frame, wherein
   the radiator comprises at least a part of the conductive side frame; and
   the metal piece is located on a surface that is of the PCB and that is opposite to the radiator, or is located between the PCB and the radiator.

10. The electronic device according to any one of claims 1 to 9, wherein
the electronic device further comprises a capacitor, and the capacitor is electrically connected between the radiator and a ground plane.

11. An electronic device, comprising:

a radiator, wherein a first end and a second end of the radiator are open ends;
a metal piece, wherein at least a part of the metal piece is disposed parallel to or coplanar with at least a part of the radiator; and
a first sensor, wherein the first sensor is electrically connected to the radiator; and
the first sensor is electrically connected to the metal piece, or the metal piece is electrically connected to the radiator.

12. The electronic device according to claim 11, wherein

the metal piece is electrically connected to the radiator;
the electronic device further comprises an electronic element, and the electronic element is coupled between the metal piece and the radiator.

13. The electronic device according to claim 12, wherein an equivalent inductance value of the electronic element is greater than or equal to 22 nH.

14. The electronic device according to any one of claims 11 to 13, wherein a distance between the metal piece and the radiator is less than or equal to 100 mm.

15. The electronic device according to any one of claims 11 to 14, wherein
a ratio of an area S1 of the radiator to an area S2 of the metal piece is greater than or equal to one-fifth and less than or equal to 2.

16. The electronic device according to any one of claims 11 to 15, wherein

the electronic device further comprises a bracket; and
the radiator and the metal piece are located on a surface of the bracket.

17. The electronic device according to any one of claims 11 to 15, wherein

the electronic device further comprises a rear cover; and
the radiator and the metal piece are located on a surface of the rear cover.

18. The electronic device according to any one of claims 11 to 17, wherein
the electronic device further comprises a capacitor, and the capacitor is electrically connected between the radiator and a ground plane.

19. A power control method, applied to the electronic device according to any one of claims 1 to 18, wherein the electronic device further comprises a radio frequency chip, and the radio frequency chip is electrically connected to the first sensor;

the first sensor determines a first parameter variation value;
when the first parameter variation value is greater than or equal to a first threshold, the first sensor sends a first signal to the radio frequency chip; and
the radio frequency chip changes, based on the first signal, a power of an electrical signal transmitted to the radiator from a first value to a second value, wherein the second value is less than the first value.

20. The method according to claim 19, wherein the method further comprises:

when the first parameter variation value is less than the first threshold, sending, by the first sensor, a second signal to the radio frequency chip; and

changing, by the radio frequency chip based on the second signal, the power of the electrical signal transmitted to the radiator from the second value to the first value.

FIG. 1

FIG. 2

z

y

x

Human body

220

10

210

211

221

212

222

240

D1

230

FIG. 3

Human body

C3

220

C1

C2

210

230

FIG. 4

z
y
x

Human body

10

212  221
222  211  210

240  220

D1

230

FIG. 5

z
x  y

21

211  210

251

220

252

230

17

10

FIG. 6

FIG. 7

FIG. 8

z

y

x

Human body

10

210

211

220    221

230

FIG. 9

z

x    y

21

220    221    211    210    251

254    253

230    17

10

FIG. 10

z
x
y

221    211    21

220    254    253    210

230

17

10

FIG. 11

z
x
y

Human body

10

220    261    211    212    210

230

FIG. 12

FIG. 13

FIG. 14

S310: A first sensor determines a first parameter variation value

S320: When the first parameter variation value is greater than or equal to a first threshold, the first sensor sends a first signal to a radio frequency chip

S330: The radio frequency chip changes, based on the first signal, a power of an electrical signal transmitted to a radiator from a first value to a second value

S340: When a first capacitance variation value is less than the first threshold, the first sensor sends a second signal to the radio frequency chip

S350: The radio frequency chip changes, based on the second signal, the power of the electrical signal transmitted to the radiator from the second value to the first value

FIG. 15

## INTERNATIONAL SEARCH REPORT

| | International application No. |
| --- | --- |
| | **PCT/CN2023/137322** |

### A. CLASSIFICATION OF SUBJECT MATTER

H01Q 1/24(2006.01)i;  H04M1/02(2006.01)i

According to International Patent Classification (IPC) or to both national classification and IPC

### B. FIELDS SEARCHED

Minimum documentation searched (classification system followed by classification symbols)

IPC:  H01Q, H04M

Documentation searched other than minimum documentation to the extent that such documents are included in the fields searched

Electronic data base consulted during the international search (name of data base and, where practicable, search terms used)

CNKI, CNTXT, ENTXTC, DWPI, IEEE: 天线, 辐射, 传感器, SAR, 电磁波吸收比值, 空中下载, 距离, 电容, antenna, radiat +, sensor, specific absorption rate, over the air, space, distance, capacit+

### C. DOCUMENTS CONSIDERED TO BE RELEVANT

| Category* | Citation of document, with indication, where appropriate, of the relevant passages | Relevant to claim No. |
| --- | --- | --- |
| X | CN 111491051 A (GUANGDONG OPPO MOBILE COMMUNICATIONS CO., LTD.) 04 August 2020 (2020-08-04)<br>  description, paragraphs [0023]-[0063], and figures 3, 5 and 6 | 1-20 |
| A | CN 112968274 A (VIVO COMMUNICATION TECHNOLOGY CO., LTD.) 15 June 2021 (2021-06-15)<br>  entire document | 1-20 |
| A | CN 111029725 A (VIVO COMMUNICATION TECHNOLOGY CO., LTD.) 17 April 2020 (2020-04-17)<br>  entire document | 1-20 |
| A | WO 2017090936 A1 (SAMSUNG ELECTRONICS CO., LTD.) 01 June 2017 (2017-06-01)<br>  entire document | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 February 2024** | **22 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/137322**

| Patent document cited in search report | | | Publication date (day/month/year) | Patent family member(s) | | | Publication date (day/month/year) |
|---|---|---|---|---|---|---|---|
| CN | 111491051 | A | 04 August 2020 | None | | | |
| CN | 112968274 | A | 15 June 2021 | None | | | |
| CN | 111029725 | A | 17 April 2020 | KR | 20220116055 | A | 19 August 2022 |
| | | | | JP | 2023508703 | A | 03 March 2023 |
| | | | | US | 2022368017 | A1 | 17 November 2022 |
| | | | | WO | 2021136139 | A1 | 08 July 2021 |
| | | | | EP | 4087053 | A1 | 09 November 2022 |
| WO | 2017090936 | A1 | 01 June 2017 | US | 2018351237 | A1 | 06 December 2018 |
| | | | | EP | 3379644 | A1 | 26 September 2018 |
| | | | | KR | 20170060818 | A | 02 June 2017 |
| | | | | CN | 108292797 | A | 17 July 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211596890
- CN 202310386790